# EUROPÄISCHE PATENTSCHRIFT

(11) **EP 4 602 707 B1**
(45) Veröffentlichungstag und Bekanntmachung des Hinweises auf die Patenterteilung: **21.10.2026**
(21) Anmeldenummer: 23745076.2
(22) Anmeldetag: 05.07.2023
(51) Int. Cl.: H02K 15/06, H02K 3/34, H02K 3/30, H02K 15/10, H02K 15/066, H02K 15/068

(54) **STATOR EINER DYNAMOELEKTRISCHEN MASCHINE MIT GLEITLAGE AN NUTSCHLITZEN**
STATOR OF A DYNAMOELECTRIC MACHINE WITH SLIDING SLOT BEARING
STATOR DE MACHINE DYNAMOÉLECTRIQUE DOTÉ D'UNE COUCHE DE GLISSEMENT SUR DES FENTES DE RAINURE

(30) Priorität: 10.10.2022 EP 22200486
(43) Veröffentlichungstag der Anmeldung: 20.08.2025
(73) Patentinhaber: Innomotics GmbH, 90441 Nürnberg (DE)
(72) Erfinder: BÜTTNER, Klaus, 97618 Hollstadt (DE); KATZENBERGER, Tobias, 97631 Bad Königshofen STT Untereßfeld (DE); KIRCHNER, Klaus, 97645 Ostheim (DE); PLOCHMANN, Bastian, 91413 Neustadt an der Aisch (DE); WARMUTH, Matthias, 97618 Windshausen (DE)
(74) Vertreter: Michalski Hüttermann & Partner mbB
(86) Internationale Anmeldenummer: PCT/EP2023/068502
(87) Internationale Veröffentlichungsnummer: WO 2024/078755

(56) Entgegenhaltungen:
- JP-A- S5 619 361
- JP-A- S61 154 444
- US-A- 4 631 814

## Beschreibung

Die Erfindung betrifft ein Verfahren zur Herstellung eines Stators einer dynamoelektrischen Maschine, einen damit hergestellten Stator und eine mit einem derartigen Stator versehene dynamoelektrische Maschine, als auch die Verwendung einer derartigen dynamoelektrischen Maschine.

Wicklungssysteme dynamoelektrischer Maschinen, wie z.B. Niederspannungsmotoren werden mittels Runddrahtwickeltechnologie ausgeführt. Dabei werden die Runddrähte in Bündeln mittels eines Flyerwicklers in Spulenform gewickelt und im Anschluss über Einzugslamellen in Nuten eines Stators eingezogen.

Die Statoren sind dabei axial paketierte, insbesondere stanzpaketierte Bleche, welche radial angeordnete, zu einer Statorbohrung weisende Nuten aufweisen, in welche die Kupferdrahtbündel als Spulen gezogen werden.

Radial nach innen - also einem Rotor zugewandt - befinden sich am Stator sogenannte Nutzähne, welche in einer Art T-Form ausgeführt sind und zu einer Verjüngung der dazwischen befindlichen, anliegenden Nuten führt - den Nutschlitzen. Zwischen zwei Nutzähnen entsteht somit der sogenannte Nutspalt oder Nutschlitz, welcher im Vergleich zum sonstigen Nutquerschnitt eine Verjüngung darstellt. Durch diese Verjüngung muss beim Einziehen die Kupferwicklung geschoben werden, somit stellt diese Verjüngung das "Nadelöhr" dieser Technologie dar.

Aus elektromagnetischer Sicht wäre bei den Nuten des Stators ein Nutschlitz mit einer verschwindend kleinen Öffnung (nahe Null, aber elektrisch isolierend) sinnvoll, wohingegen aus fertigungstechnischer Sicht jedoch jede Verjüngung der eigentlichen Nutgeometrie zu Schwierigkeiten bei der oben beschriebenen Bewicklung führt.

Bisher wurde der Nutschlitz so weit reduziert, wie es die damit steigenden Einziehkräfte auf den Wickeleinziehautomaten und den Drahtlack zuließ.

Eine Erhöhung der Gleitfähigkeit des Drahtlacks ist hierbei eine Möglichkeit die Einziehkräfte zu reduzieren, da hierdurch Drahtkreuzungen leichter abgleiten und sich auflösen können.

Die Gleitfähigkeitserhöhung ohne Einbußen bei der späteren Imprägnierbarkeit der Wicklung (die Vergussmasse haftet an derartigen Oberflächen äußerst unzureichend) ist allerdings limitiert.

Durch alternative Wickeleinziehtechnologien (z.B. Nadelwickeltechnik oder Handwickelei) ist es möglich kleinere Nutspalte zu verwenden. Dies führt aber zu steigenden Herstellungskosten eines Stators.

Ebenso ist die Reduktion der Kupferfüllung in der Nut möglich, jedoch aufgrund der steigenden Anforderungen hinsichtlich der Motoreneffizienz keine sinnvolle Option. JPS5619361A und US4631814A beschreiben bekannte Verfahren zur Herstellung eines Stators.

Ausgehend davon liegt der Erfindung die Aufgabe zugrunde ein Verfahren zur Herstellung eines Stators bereitzustellen, das eine automatisierte Herstellung einer Bewicklung eines Stators einer dynamoelektrischen Maschine ermöglicht, und eine dynamoelektrischen Maschine schafft, die eine vergleichsweise hohe Effizienz aufweist.

Die Lösung der gestellten Aufgabe gelingt durch ein Verfahren zur Herstellung eines Stators einer dynamoelektrischen Maschine das folgende Schritte aufweist:
- Paketieren eines Blechpakets, das zumindest eine Statorbohrung, axial verlaufende Nuten und mit zur Statorbohrung weisenden Nutschlitze aufweist, wobei eine Nut in Umfangrichtung/Querschnitt betrachtet durch zwei unmittelbar benachbarte Zahnschäfte, Abschnitten der dazugehörigen Zahnköpfe, den Nutschlitz und einen Nutgrund gebildet wird, wobei der Nutschlitz durch zwei einander gegenüberliegende Endabschnitte in Umfangsrichtung betrachtet benachbarter Zahnköpfe gebildet wird,
- beschichten der Endabschnitte mit einer gleitfähigen, insbesondere elektrisch isolierenden Beschichtung,
- Einziehen einer, insbesondere vorgefertigten Wicklung, insbesondere Bündel von Runddrähten in Spulenform, über die Nutschlitze in die Nuten.

Die Lösung der gestellten Aufgabe gelingt auch durch einen Stator einer dynamoelektrischen Maschine gemäß Anspruch 7, dessen Nutschlitze erfindungsgemäß beschichtet sind.

Die Lösung der gestellten Aufgabe gelingt auch durch eine dynamoelektrische Maschine mit einem erfindungsgemäßen Stator, wobei der Wirkungsgrad der dynamoelektrischen Maschine zumindest 95% beträgt.

Die Lösung der gestellten Aufgabe gelingt auch durch eine Verwendung einer erfindungsgemäßen dynamoelektrischen Maschine bei Antrieben, insbesondere bei Antrieben im Dauerbetrieb wie Lüfter, Verdichtern, Pumpen etc.

Durch die Beschichtung von Endabschnitten der Zahnköpfe an den Nutschlitzen bzw. im Bereich der Nutschlitze stellt sich eine Schutzwirkung gegenüber den über den Nutschlitz einzuziehenden Wicklung ein.

Gegenüber dem Stand der Technik, bei dem Einziehlamellen eines Lamellenwerkzeugs die Nutschlitze während des Einziehvorganges der Wicklung abdecken, ist damit zwar eine Verringerung des Nutschlitzes durch die Beschichtung vorhanden, aber bei weitem keine derartig erhebliche Verringerung des Nutschlitzes.

Diese Einzugslamellen, welche das jeweilige Drahtbündel der Wicklung lokal am Nutschlitz verjüngen, sind dabei so ausgeführt, dass sie als Flanken in die Nutöffnung mit eingeschoben werden, um den mechanischen Schutz der Drähte gegenüber den Nutzähnen beim Einziehen zu gewährleisten. Dies ist notwendig, da das Drahtbündel nahezu axial an diesen entlang gezogen wird und somit an den Blechkanten (welche wie die Einzelbleche senkrecht zur Bewegungsrichtung liegen) mechanisch gerieben würden.

Beim standardmäßigen Wickeleinziehverfahren mittels Einziehlamellen ist die Schutzschicht der Drahtbündel als Flanken des Lamellenwerkzeugs bestehend aus 0,3 mm Edelstahl ausgeführt, welche eine zusätzliche Toleranz zum Nutzahn benötigen.

Durch diese Schutzflanken der Einziehlamellen, welche aus glattem, poliertem Stahl bestehen, ist dieses Problem gelöst, allerdings verjüngen sie damit die effektive Nutspaltbreite um deren zweifache Dicke zuzüglich einem Toleranzmaß (Typische Werte sind dabei: Nutschlitz: 3,2 mm, Verjüngung: 2 x 0,3 mm Lamellendicke + 0,4 mm (Toleranz und "Lamellenspiel") = 1 mm), also im konkreten Fall um ca. 30%.

Im Stand der Technik reduziert sich der Nutschlitz konkret also folgendermaßen. Die in den Nutschlitz ragenden Flanken der Einziehlamellen sind je Seite 0,3 mm breit, wobei eine Toleranz von 2 x 0,1 mm zum Nutzahn einzurechnen ist. Somit ist hier ein gesamter Nutschlitz-Verlust von 0,8 mm + 0,2 mm (zusätzliches "Lamellenspiel") also von 1 mm zu verzeichnen.

Erfindungsgemäß wird also die Schutzwirkung der Einziehlamellen des Lamellenwerkzeugs durch eine aufgebrachte Beschichtung an den Endabschnitten ersetzt. Diese Beschichtung kann additiv, vorzugsweise gesprüht appliziert werden, so dass keine in den Nutschlitz reichende Flanken des Lamellenwerkzeugs an den Endabschnitten mehr notwendig sind.

Zeitlich vor dem Wickeleinzugsverfahren wird erfindungsgemäß eine Kunststoffschicht zumindest stirnseitig auf die Endabschnitte der Nutzähne aufgetragen, welche die Blechkonturen (stirnseitig, Einzelbleche mit Blechkanten) überdeckt. Hierbei ist wichtig, dass die aufgetragene Kunststoffschicht zumindest die Blechkanten kaschiert. Eine stetige und glatte ununterbrochene Kunststoffoberfläche ist nicht zwingend notwendig, ist jedoch sinnvoll, um die Gleitreibung beim Einziehverfahren zu verbessern, d.h., die Einziehkräfte weiter zu verringern.

Dabei ist die Beschichtung maximal 50 µm dick. Somit wird der Nutschlitz weit weniger reduziert, was den Einziehvorgang erleichtert, insbesondere die notwendigen Einziehkräfte des Lamellenwerkzeugs reduziert. Des Weiteren können auch Wickeldrähte mit größeren Durchmessern verwendet werden.

Die aufgebrachte Beschichtung muss somit nur wenige µm bis maximal 50 µm dick sein, um statistisch sicherzustellen, dass alle Blechkanten zumindest mit wenigen µm Kunststoffüberzogen sind, sodass ein vorbeigleitender Lackdraht der Wicklung beim Einziehen keine mechanischen Verletzungen, insbesondere Kratzer seiner Isolation erhält.

Typische - dafür geeignete Kunststoffbeschichtungen sind dabei Duromerlacke (z.B. PEI, PU, Epoxy, Polysiloxane, Polysilazane ...) welche mittels Lösemittel verdünnt in dünnen Schichten sprühbar sind und durch die Nutzung von zwei komponentigen Materialien bei Raumtemperatur innerhalb weniger Stunden härten. Durch leichte Erwärmung (z.B. 70°C für wenige Stunden) kann diese Zeitspanne zusätzlich verkürzt werden.

Eine weitere Variante zur Aufbringung einer dünnen Kunststoffschicht ist die Nutzung von löslichen Thermoplasten, wie z.B. PEG, PVP oder PVA, welche nach der Abtrocknung des Lösemittels innerhalb kurzer Zeit eine physikalisch getrocknete Schicht ergeben und somit einen Schutzfilm in der oben genannten Dicke erzeugen. Dabei werden Produkte mit hohen Molekulargewichten eingesetzt, welche die spätere Wärmeklasse des Motors zumindest erreichen.

Eine weitere Möglichkeit eine solche Schicht zu realisieren ist die Nutzung von hochschmelzenden Wachsen und hochmolekularen Fetten, welche dann ebenfalls bei hohen Temperaturen (z.B. >250°C) aufgesprüht werden können und durch die instantane Abkühlung einen Schutzfilm bieten.

Eine weitere Möglichkeit ist die Nutzung von hochschmelzenden thermoplastischen Schmelzklebern (z.B. PA), welche über eine Rotationsdüse in Form einer fliegenden Helix auf das Substrat geschleudert (gesprüht) werden, beim Auftreffen auf die Endabschnitte abkühlen und sich zu einer Schicht verfestigt. Hierbei ist über Materialtemperatur, Drucklufttemperatur, Druck, Düsengeometrie, usw. eine Vielzahl unterschiedlichster Sprühbilder (geschlossen, porös), Schichtdicken und Anhaftungsverhalten zu erreichen. Die erkaltete Oberfläche ist im Anschluss ähnlich gleitfähig wie ein glattes Thermoplastgehäuse.

Zusätzlich sind den oben genannten Kunststoffen gleitfähige Füllstoffe als Additive hinzugebbar, welche die Gleitreibung des Kunststoffschicht weiter verbessern und, sofern die Additive mit einem Formfaktor (also Plättchenform oder Stäbchenform) versehen sind, sind Spalte zwischen zwei axial benachbarten Blechen überbrückbar. Mögliche, gängige Gleit-Additive sind hierbei BN, Graphit und PTFE, welche zwischen 1 und 25 Vol-% der Kunststoffmatrix zugegeben werden.

Durch die aufgesprühte Beschichtung wird dem Nutschlitz grundsätzlich unabhängig von der Zusammensetzung der Schicht nunmehr lediglich eine Verringerung von maximal 2 x 50 µm zugefügt.

Somit kann im oben genannten Beispiel, der Nutzahn, um auf die minimal notwenige Nutöffnung, welche vom verwendeten Draht bestimmt wird, vorteilhafterweise verbreitert werden, da die Drahtbündel an der aufgesprühten Beschichtung entlanggleiten können, ohne Schaden an den Blechkanten zu nehmen.

Die Schutzfunktion des Drahtbündels beim Einziehen der Wicklung in die Nut über den Nutschlitz wird erfindungsgemäß durch eine Gleitbeschichtung erfüllt, die als Trennlage fungiert. Diese kann deutlich dünner sein und kommt ohne Toleranzmaß gegenüber den in den Nutschlitz ragenden Einziehlamellen aus, wodurch die effektive Nutzahnbreite und damit die Effizienz des Motors gesteigert werden kann, ohne den effektiven Nutschlitz beim Einziehen der Wicklung mit Standardmitteln zu verringern.

Das erfindungsgemäße Verfahren zur Herstellung eines Stators einer dynamoelektrischen Maschine, kann nunmehr auf die Flanken der Einziehlamellen vor allem im Nutzschlitz verzichten, ohne dabei eine Beschädigung des Drahtlackes der Wicklung bei Einziehen befürchten zu müssen.

Durch die erfindungsgemäße Beschichtung des Nutschlitzes wird also einen dementsprechend größerer bzw. in Umfangsrichtung betrachtet breiterer Nutzahn ermöglicht, bei vergleichsweise geringerer Nutschlitzbreite, was die Effizienz einer dynamoelektrischen Maschine um bis zu einem Prozentpunkt erhöht.

Durch die erfindungsgemäße Beschichtung der Nutschlitze des Stators werden also u.a. dementsprechend größere bzw. in Umfangsrichtung betrachtet breitere Zahnköpfe, bei vergleichsweise geringerer Nutschlitzbreite ermöglicht, was die Effizienz einer dynamoelektrischen Maschine mit einem derartigen Stator um bis zu einem Prozentpunkt erhöht.

Dies ist vor allem bei Antrieben, insbesondere bei Antrieben im Dauerbetrieb wie Lüfter, Verdichtern, Pumpen etc. besonders vorteilhaft.

Die Erfindung sowie weitere vorteilhafte Ausgestaltungen der Erfindung werden anhand prinzipiell dargestellter Ausführungsbeispiele näher erläutert, darin zeigen:
- FIG 1: einen prinzipiellen Längsschnitt einer dynamoelektrischen Maschine,
- FIG 2: einen prinzipiellen Querschnitt eines Stators,
- FIG 3 bis 5: Einziehtechnik nach dem Stand der Technik,
- FIG 6 und 7: prinzipielle Darstellung des Sprühverfahrens,
- FIG 8 bis 10: prinzipielle Darstellung des erfindungsgemäßen Verfahrens,
- FIG 11: Ausschnitt aus Blechpaket,
- FIG 12: Detailansicht des Ausschnitts des Blechpakets,
- FIG 13: Detailansicht des Nutschlitz.

Es sei angemerkt, dass sich Begriffe wie "axial", "radial", "tangential" etc. auf die in der jeweiligen FIG bzw. im jeweils beschriebenen Beispiel zum Einsatz kommende Achse 27 beziehen. Mit anderen Worten: die Richtungen axial, radial, tangential beziehen sich stets auf eine Achse 27 des Rotors 14 und damit auf die entsprechende Symmetrieachse des Stators 2.

Dabei beschreibt "axial" eine Richtung parallel zur Achse 27, "radial" beschreibt eine Richtung orthogonal zur Achse 27, auf diese zu oder auch von ihr weg, und "tangential" ist eine Richtung, die in konstantem radialem Abstand zur Achse 27 und bei konstanter Axialposition kreisförmig um die Achse 27 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 14 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

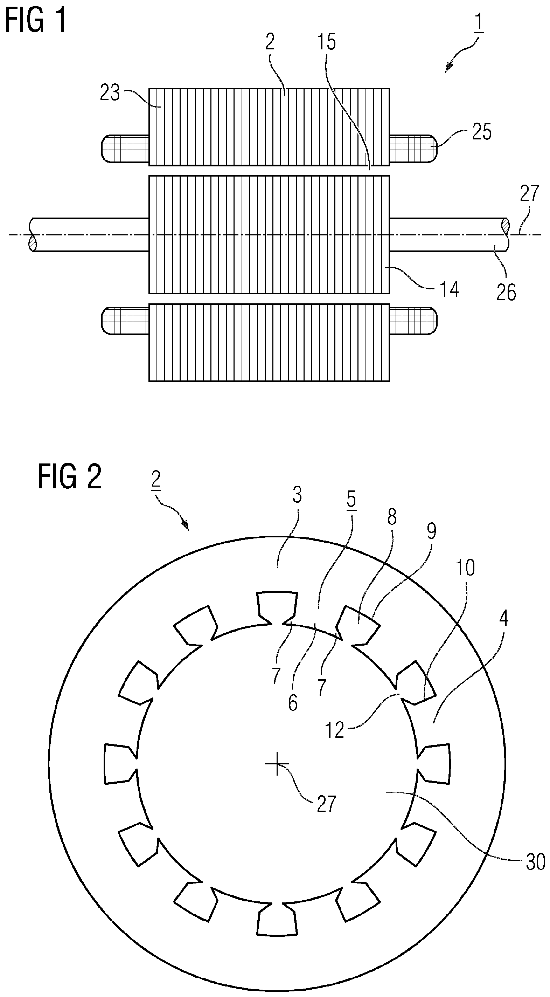

FIG 1 zeigt in einem Längsschnitt eine prinzipielle Darstellung einer dynamoelektrischen Maschine 1. Ein Stator 2 aus axial geschichteten Blechen 11 gebildet, weist in seiner Statorbohrung 30 einen Rotor 14 auf. Ein Blechpaket 23 ist aus einzelnen Blechen 11 paketiert, insbesondere Stanzpaketiert. Stator 2 und Rotor 14 sind durch einen Luftspalt 15 voneinander beabstandet. Auf einer Mantelinnenseite der Statorbohrung 30 sind im Wesentlichen axial verlaufenden Nuten 8 vorgesehen, die einen Nutschlitz 12 in Richtung Luftspalt 15 ausbilden.

Die Nuten 8 des Stators 2 und/oder Nuten des Rotors 14 verlaufen achs-parallel oder weisen einen schrägen Verlauf von der einen Stirnseite zur anderen Stirnseite von bis zu zwei oder drei Nutteilungen auf.

Der Rotor 14 ist mit einer Welle 26 drehfest verbunden und um eine Achse 27 drehbar gelagert. Über die Nutschlitze 12 der Nuten 8 wird bei der Herstellung des Stators 2 ein Wicklungssystem 25, insbesondere Drahtbündel, die als Spulen geformt sind, mittels eines Lamellenwerkzeuges über die Nutschlitze 12 in die jeweiligen Nuten 8 eingezogen. Dabei ist während des Einziehvorganges die Drahtisolation dieser Spulen an den Kanten der Nutschlitze 12 der Gefahr von Kratzern und damit einer Herabsetzung der Isolationsfähigkeit der Drähte ausgesetzt.

FIG 2 zeigt in einem prinzipiellen Querschnitt den Stator 2 mit seiner Statorbohrung 30, seinem Jochrücken 3 und den zur Achse 27 weisenden Nuten 8. Dabei weist eine Nut 8 einen Nutgrund 9, Nutwände 10, als auch einen Nutschlitz 12 auf. Die Nut 8 wird somit durch in Umfangsrichtung betrachtet benachbarte Zähne 5 geschaffen. Die Nutwand 10 ist dabei im Bereich des Zahnschaftes 4 angeordnet und die Zahnköpfe 6, insbesondere deren Endabschnitte 7 bilden den Nutschlitz 12. Ein Positionieren eines Wicklungssystems 25 in der Nut 8 erfolgt über den Nutschlitz 12 und damit entlang der Endabschnitte 7 der benachbarten Zahnköpfe 6. In diesem Bereich können bei einem Einziehvorgang Beschädigungen einer Isolation der Drähte des Wicklungssystems 25 auftreten.

Aus diesem Grund wird gemäß dem Stand der Technik die Wicklung 25, wie den FIG 1 bis FIG 4 prinzipiell zu entnehmen ist, folgendermaßen in die Nut 8 eingebracht.

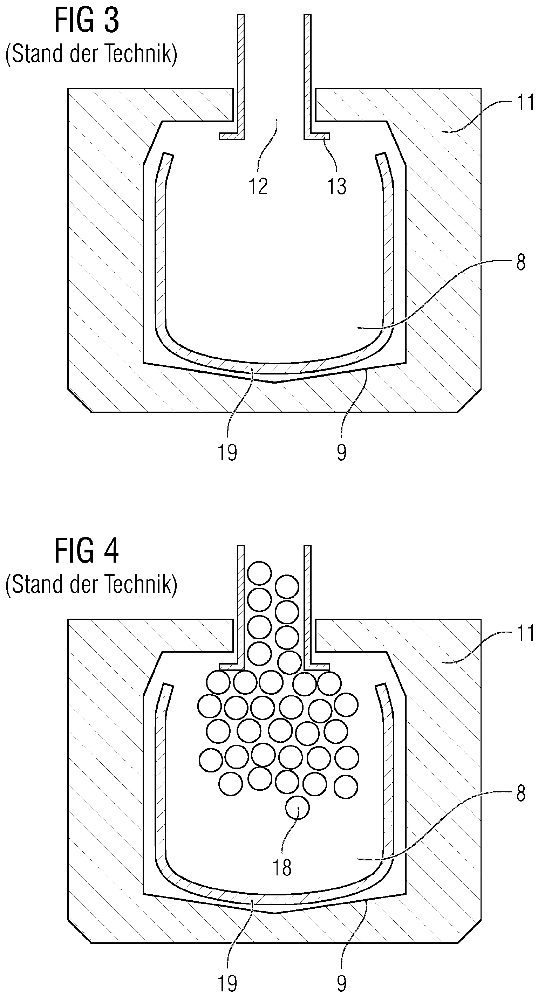

Zunächst werden die Einzugslamellen bzw. Flanken des Lamellenwerkzeugs 13 gemäß FIG 3 in dem Nutschlitz 12 positioniert, um einen mechanischen Schutz der Drähte gegenüber den Nutzähnen, vor allem deren Endabschnitten beim Einziehen zu gewährleisten. Dadurch wird ermöglicht, dass das jeweilige Drahtbündel gemäß FIG 4 lokal verjüngt wird. Dies ist notwendig, da das Drahtbündel des Wicklungssystems 25 zur Positionierung in der Nut 8 über den Nutschlitz 12 und dabei nahezu axial an diesen Nutzähnen 5 entlang gezogen wird. Durch die Einzugslamellen am Nutschlitz 12 wird somit eine Beschädigung der Isolation der Drähte beim Einziehen vermieden, wobei das Einziehen senkrecht zur axialen Schichtung des Blechpakets 23 bzw. senkrecht zur Bewegungsrichtung des Lamellenwerkzeugs 13 stattfindet.

Dieses Problem wird durch Schutzflanken der Einzugslamellen, welche aus glattem, poliertem Stahl bestehen, gelöst. Nachteilig dabei ist, dass sich die effektive Breite des Nutschlitzes erheblich reduziert, (Typische Werte: Nutschlitz: 3,2 mm, Verjüngung: 2 x 0,3 mm Lamellendicke + 0,4 mm (Toleranz und "Lamellenspiel") = 1 mm), also im konkreten Fall um ca. 30%.

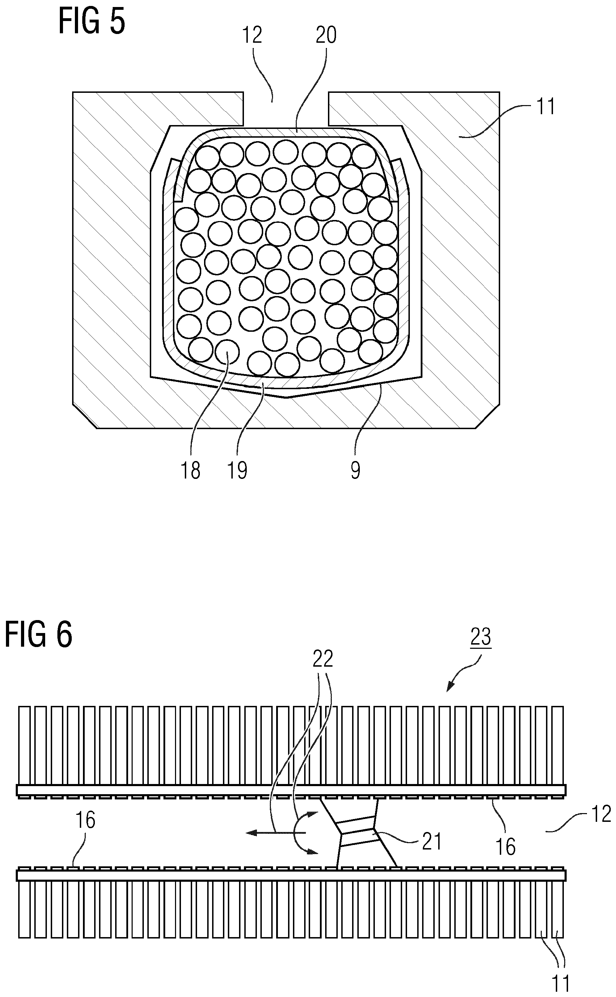

Erfindungsgemäß wird daher - um eine Nut 8 mit Wicklungssystem 25 gemäß FIG 5 zu erhalten - gemäß FIG 6 an die Endabschnitte der Zahnköpfe 6 - also im Bereich des Nutschlitzes 12 eine Beschichtung 16 aufgetragen. Dies kann beispielsweise durch ein Sprühwerkzeug 21 erfolgen, das einen oder mehrere Nutschlitze 12 durch eine axiale Bewegung mit überlagerter Drehung entlangfährt.

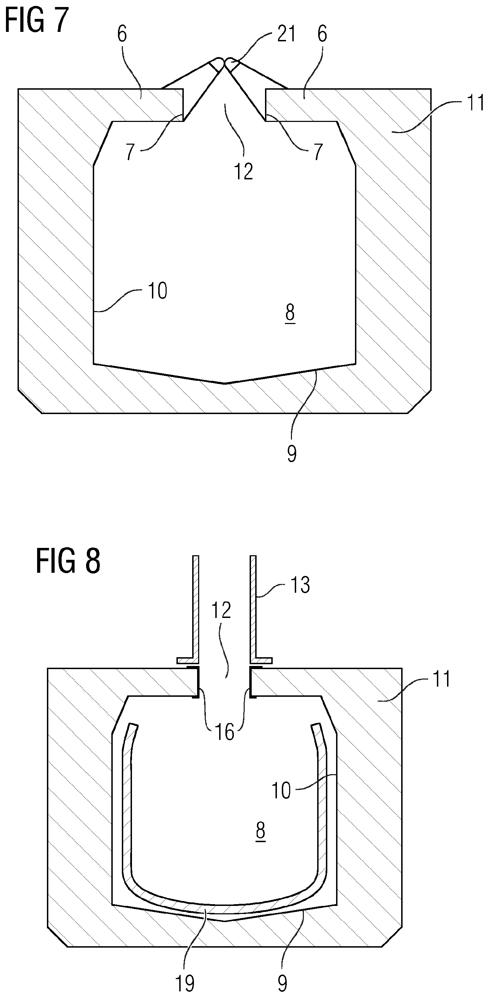

Dabei werden gemäß FIG 7 die Kanten der Endabschnitte 7 beschichtet. Dabei werden sowohl die Ecken der Endabschnitte 7 (zur Nut und zum Luftspalt weisend), als auch deren vorzugsweise parallelen Flanken beschichtet.

Diese Beschichtung, die die Schutzwirkung der Einzugslamellen übernimmt, wird additiv, vorzugsweise gesprüht appliziert. Die Edelstahlflanken der Lamellen sind 0,3 mm, wobei eine Toleranz von 2 x 0,1 mm zum Zahnkopf 6 eingerechnet ist. Somit ist ein gesamter Nutschlitz-Verlust von 0,8 mm +0,2 mm zusätzlichem "Lamellenspiel" zu verzeichnen.

Die Lamellen des Lamellenwerkzeugs 13 setzen somit für den Einziehprozess der Wicklung 25 nunmehr gemäß FIG 8 formschlüssig an benachbarten Zahnköpfen 6, also dem beschichteten Nutschlitz 12 auf der Seite der Statorbohrung 30 auf. Die Nuten 8 sind dabei mit einer Nutauskleidung 19, also einem Nutkasten, meistens PET-Multilaminat mit Aramidfilz, Dicke ca. 300 µm, versehen.

Vorzugseise weisen die anliegenden Lamellen und der beschichtete Nutzschlitz 12 die gleiche Breite auf.

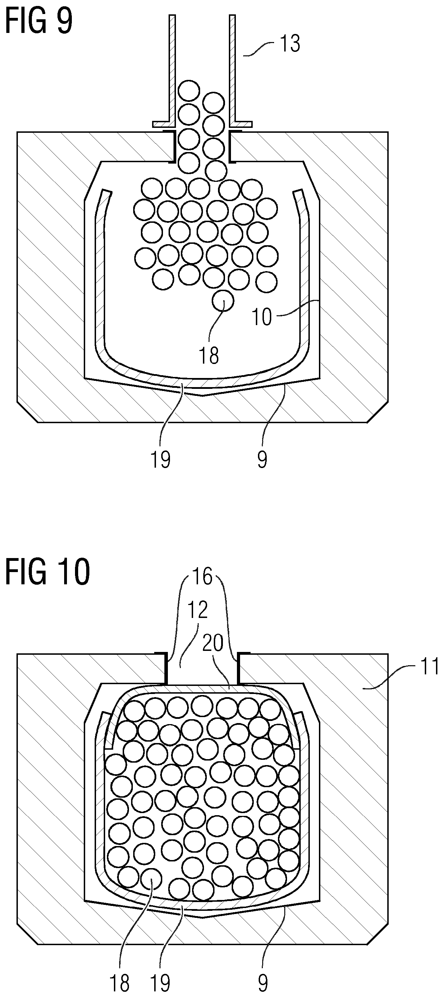

Danach erfolgt über den vergleichsweise breiten Nutschlitz 12 der Einziehvorgang der Wicklung 25 gemäß FIG 9 in die Nut 8.

Die Beschichtung 16 verbleibt am Nutschlitz 12. Nach dem Einziehen der Wicklung 25 über den Nutschlitz 12 wird die Nut 8 durch einen Deckschieber 20 gemäß FIG 10 abgedeckt. Anschließend wird ein Wickelkopf an beiden Stirnseiten des Stators 2 geformt und der Stator 2 vergossen.

Das Blechpaket 23 des Stators 2 weist Stapeltoleranzen auf, die sich in vergleichsweise geringe Spalte und Kanten zwischen den einzelnen Blechen 11, aber auch an den Zahnköpfen 6 der Endabschnitte 7 zeigen.

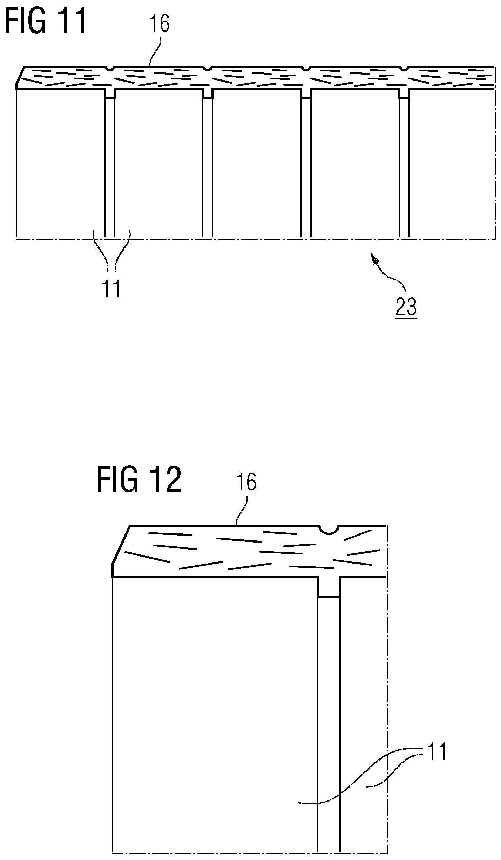

Durch die Beschichtung 16 erfolgt eine Egalisierung dieser Spalte und Kanten bzw. eventueller Stapeltoleranzen und eine Überdeckung von Blechkanten gemäß FIG 11. Dies führt zu einer deutlichen Reduktion der makroskopischen Oberflächenrauhigkeit, die idealerweise, aber nicht zwingend notwendig, eine stetig glatte Oberfläche bildet. Die Kontur kann auch im Bereich der Spalte und Kanten flache Bögen bilden, gemäß FIG 11 und FIG 12. Die Reduktion der mikroskopischen Oberflächenrauhigkeit wird durch die Wahl des Polymers und deren Füllstoffadditive bestimmt.

Zeitlich vor dem Wickeleinzugsverfahren wird somit eine Kunststoffschicht zumindest stirnseitig auf die Endabschnitte 7 der Zähne 6 aufgetragen, welche die Blechkonturen (stirnseitig, Einzelbleche mit Blechkanten) überdeckt. Hierbei ist wichtig, dass die aufgetragene Kunststoffschicht zumindest die Blechkanten für den folgenden Einziehvorgang der Wicklung 25 kaschiert. Eine stetige und glatte ununterbrochene Kunststoffoberfläche ist dabei nicht zwingend notwendig, ist jedoch sinnvoll, um die Gleitreibung beim Einziehverfahren zu verbessern, d.h., die Einziehkräfte weiter zu verringern.

Dabei ist die Beschichtung 16 in den oben genannten Bereichen maximal 50 µm dick. Somit wird der Nutschlitz 12 weit weniger verjüngt, was den Einziehvorgang erleichtert, insbesondere die notwendigen Einziehkräfte des Lamellenwerkzeugs reduziert. Des Weiteren können auch Wickeldrähte mit größeren Durchmessern verwendet werden.

Die aufgebrachte Beschichtung 16 muss somit nur wenige µm bis maximal 50 µm dick sein, um statistisch sicherzustellen, dass alle Blechkanten zumindest mit wenigen µm Kunststoff überzogen sind, so dass ein vorbeigleitender Draht der Wicklung 25, insbesondere Lackdraht der Wicklung beim Einziehen keine mechanischen Verletzungen, insbesondere Kratzer seiner Isolation erhält.

Geeignete Kunststoffbeschichtungen sind dabei Duromerlacke (z.B. PEI, PU, Epoxy, Polysiloxane, Polysilazane etc.) welche mittels Lösemittel verdünnt in dünnen Schichten sprühbar sind und durch die Nutzung von zwei-komponentigen Materialien bei Raumtemperatur innerhalb weniger Stunden härten. Durch leichte Erwärmung **(z.B.** 70°C für wenige Stunden) kann diese Zeitspanne zusätzlich verkürzt werden.

Eine weitere Variante zur Aufbringung einer dünnen Kunststoffschicht ist die Nutzung von löslichen Thermoplasten, wie **z.B.** PEG, PVP oder PVA, welche nach der Abtrocknung des Lösemittels innerhalb kurzer Zeit eine physikalisch getrocknete Schicht ergeben und somit einen Schutzfilm in der oben genannten Dicke erzeugen. Dabei werden Produkte mit hohen Molekulargewichten eingesetzt, welche die spätere Wärmeklasse des Motors 1 zumindest erreichen.

Eine weitere Möglichkeit eine solche Schicht zu realisieren ist die Nutzung von hochschmelzenden Wachsen und hochmolekularen Fetten, welche dann ebenfalls bei hohen Temperaturen (z.B. > 250°C) aufgesprüht werden können und durch die instantane Abkühlung einen Schutzfilm bieten.

Eine weitere Möglichkeit ist die Nutzung von hochschmelzenden thermoplastischen Schmelzklebern (z.B. PA), welche über eine Rotationsdüse eines Sprühwerkzeugs 21 in Form einer fliegenden Helix auf das Substrat geschleudert (gesprüht) werden, beim Auftreffen auf die Endabschnitte abkühlen und sich zu einer Schicht verfestigt. Hierbei ist über Materialtemperatur, Drucklufttemperatur, Druck, Düsengeometrie, usw. eine Vielzahl unterschiedlichster Sprühbilder (geschlossen, porös), Schichtdicken und Anhaftungsverhalten zu erreichen. Die erkaltete Oberfläche ist im Anschluss ähnlich gleitfähig wie ein glattes Thermoplastgehäuse.

Zusätzlich sind den oben genannten Kunststoffen gleitfähige Füllstoffadditive hinzugebbar, welche die Gleitreibung des Beschichtung 16 weiter verbessern und, sofern die Additive mit einem Formfaktor (also Plättchenform oder Stäbchenform) versehen sind, Spalte zwischen zwei axial benachbarten Blechen 11 im Blechpaket 23 überbrücken. Mögliche, gängige Gleit-Additive sind hierbei BN, Graphit und PTFE, welche zwischen 1 und 25 Vol-% der Kunststoffmatrix zugegeben werden.

Durch die aufgesprühte Beschichtung 16 wird dem Nutschlitz 12 grundsätzlich unabhängig von der Zusammensetzung der Schicht nunmehr lediglich eine Verringerung von maximal 2 x 50 µm zugefügt.

Somit kann im oben genannten Beispiel der Zahnkopf 6, auf die minimal notwenige Breite des Nutschlitzes 12, welche u.a. vom verwendeten Draht bestimmt wird, verbreitert werden, da die Drahtbündel an der aufgesprühten Beschichtung 16 entlanggleiten können, ohne Schaden an den Blechkanten zu nehmen.

Die Schutzfunktion des Drahtbündels beim Einziehen der Wicklung in die Nut 8 über den Nutschlitz 12 wird erfindungsgemäß durch die Beschichtung 16 erfüllt, die als Trennlage fungiert. Diese kann deutlich dünner sein und kommt ohne Toleranzmaß gegenüber den in den Nutschlitz 12 ragenden Einziehlamellen aus, wodurch die effektive Nutzahnbreite und damit die Effizienz des Motors gesteigert werden kann, ohne den effektiven Nutschlitz beim Einziehen der Wicklung mit Standardmitteln zu verringern.

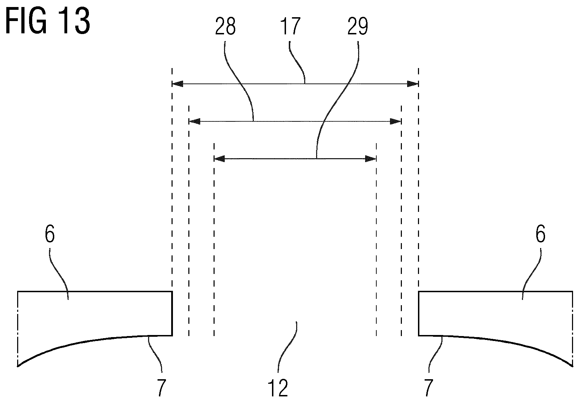

FIG 13 zeigt einen beispielhaften Nutschlitz 12, der durch die Endabschnitte 7 der in Umfangsrichtung betrachtet benachbarten Zahnköpfe 6 gebildet ist. Dabei ist die maximal mögliche Breite 17 des Nutschlitzes 12. Die durch das Lamellenwerkzeug in den Nutschlitz 12 reichenden Lamellen reduzieren die Breite des Nutschlitzes 12 auf die Lamellenbreite 29. Demgegenüber wird durch die erfindungsgemäße Beschichtung 16 die Breite des Nutschlitzes 12 lediglich auf Beschichtungsbreite 28 reduziert.

Bei einem erfindungsgemäßen Verfahren zur Herstellung eines Stators 2 einer dynamoelektrischen Maschine 1, kann nunmehr auf die Flanken der Einziehlamellen vor allem im Nutzschlitz 12 verzichtet werden, ohne dabei eine Beschädigung des Drahtlackes der Wicklung bei Einziehen befürchten zu müssen.

Durch die erfindungsgemäße Beschichtung 16 der Nutschlitze 12 werden also dementsprechend größere bzw. in Umfangsrichtung betrachtet breitere Zahnköpfe 6, bei vergleichsweise geringerer Nutschlitzbreite ermöglicht, was die Effizienz einer dynamoelektrischen Maschine 1 um bis zu einem Prozentpunkt erhöht.

## Patentansprüche

1. Verfahren zur Herstellung eines Stators (2) einer dynamoelektrischen Maschine (1) das folgende Schritte aufweist:
- Paketieren eines Blechpakets (23), das zumindest eine Statorbohrung (30), axial verlaufende Nuten (8) und mit zur Statorbohrung (30) weisenden Nutschlitze (12) aufweist, wobei eine Nut (8) in Umfangrichtung betrachtet durch zwei unmittelbar benachbarte Zahnschäfte (4), Abschnitten der dazugehörigen Zahnköpfe (6), den Nutschlitz (12) und einen Nutgrund (9) gebildet wird, wobei der Nutschlitz (12) durch zwei einander gegenüberliegende Endabschnitte (7) in Umfangsrichtung betrachtet benachbarter Zahnköpfe (6) gebildet wird,
- beschichten der Endabschnitte (7) mit einer gleitfähigen, insbesondere elektrisch isolierenden Beschichtung (16),
- Einziehen einer, insbesondere vorgefertigten Wicklung (25), insbesondere Bündel von Runddrähten in Spulenform, über die Nutschlitze (12) in die Nuten (8), und **dadurch gekennzeichnet dass**,
- die Auftragung auf die Endabschnitte (7) der Zahnköpfe (6) mittels eines Schleudervorganges oder einer Düse, insbesondere Rotationsdüse erfolgt, wobei diese Schleuder- oder Sprüh-Vorrichtung während der Auftragung axial innerhalb der Statorbohrung (30) bewegt wird und dabei einen oder gleichzeitig mehrere Nutschlitze (12) mit der gleitfähigen Schicht (16) versieht.

2. Verfahren zur Herstellung eines Stators (2) einer dynamoelektrischen Maschine (1) nach Anspruch 1, **dadurch gekennzeichnet , dass** die gleitfähige Schicht (16) an den Endabschnitten (7) als verdünnte Duromerlacke aufgesprüht werden.

3. Verfahren zur Herstellung eines Stators (2) einer dynamoelektrischen Maschine (1) nach Anspruch 1, **dadurch gekennzeichnet , dass** die gleitfähige Schicht (16) an den Endabschnitten (7) als lösliche Thermoplaste aufgetragen werden.

4. Verfahren zur Herstellung eines Stators (2) einer dynamoelektrischen Maschine (1) nach Anspruch 1, **dadurch gekennzeichnet, dass** die gleitfähige Schicht (16) an den Endabschnitten (7) mittels hochschmelzender Wachse oder Fette aufgesprüht werden.

5. Verfahren zur Herstellung eines Stators (2) einer dynamoelektrischen Maschine (1) nach Anspruch 1, **dadurch gekennzeichnet, dass** die gleitfähige Schicht (16) an den Endabschnitten (7) mittels thermoplastischem Schmelzkleber aufgebracht wird.

6. Verfahren zur Herstellung eines Stators (2) einer dynamoelektrischen Maschine (1) nach einem der vorhergehenden Ansprüche, **dadurch gekennzeichnet, dass** die Wicklung (25) über ein Lamellenwerkzeug (13), in eine oder mehrere Nuten (8) eingezogen wird, wobei das Lamellenwerkzeug (13) auf der der Statorbohrung (30) zugewandten Seite des Nutschlitzes (12) ansetzt.

7. Stator (2) einer dynamoelektrischen Maschine (1) hergestellt nach einem der Ansprüche 1 bis 6, **dadurch gekennzeichnet, dass** der Nutschlitz (12) beschichtet ist, wobei die Beschichtung eine Kunststoffschicht ist, die nur wenige µm bis max. 50 µm dick ist.

8. Stator (2) einer dynamoelektrischen Maschine (1) nach Anspruch 7, **dadurch gekennzeichnet, dass** der Nutschlitz (12) dem x-fachen des Drahtdurchmessers der Wicklung (25) entspricht, wobei x>1 ist.

9. Dynamoelektrische Maschine (1) mit einem Stator (2) nach Anspruch 7 oder 8, **dadurch gekennzeich**- **net**, dass der Wirkungsgrad der dynamoelektrischen Maschine (1) zumindest 95% beträgt.

10. Verwendung einer dynamoelektrischen Maschine (1) nach Anspruch 9 bei Antrieben, insbesondere bei Antrieben im Dauerbetrieb wie Lüfter, Verdichtern, Pumpen etc..

## Claims

1. Method for manufacturing a stator (2) of a dynamoelectric machine (1), comprising the following steps:
- stacking a laminated core (23), which comprises at least one stator bore (30), axially extending slots (8), and slot openings (12) facing the stator bore (30), wherein, viewed in the circumferential direction, a slot (8) is formed by two immediately adjacent tooth shanks (4), portions of the associated tooth heads (6), the slot opening (12), and a slot bottom (9), wherein the slot opening (12) is formed by two mutually opposing end portions (7) of tooth heads (6) that are adjacent when viewed in the circumferential direction,
- coating the end portions (7) with a low-friction, in particular electrically insulating coating (16), - inserting a winding (25), in particular a prefabricated winding (25), in particular bundles of round wires in coil form, through the slot openings (12) into the slots (8), and **characterized in that**,
- the application to the end portions (7) of the tooth heads (6) is performed by means of a centrifugal application process or a nozzle, in particular a rotary nozzle, wherein this centrifugal or spraying device is moved axially within the stator bore (30) during the application and, in the process, provides one or simultaneously a plurality of slot openings (12) with the low-friction layer (16).

2. Method for manufacturing a stator (2) of a dynamoelectric machine (1) according to claim 1, **characterized in that** the low-friction layer (16) is sprayed onto the end portions (7) in the form of a diluted thermosetting varnish.

3. Method for manufacturing a stator (2) of a dynamoelectric machine (1) according to claim 1, **characterized in that** the low-friction layer (16) is applied to the end portions (7) in the form of soluble thermoplastics.

4. Method for manufacturing a stator (2) of a dynamoelectric machine (1) according to claim 1, **characterized in that** the low-friction layer (16) is sprayed onto the end portions (7) by means of high-melting waxes or fats.

5. Method for manufacturing a stator (2) of a dynamoelectric machine (1) according to claim 1, **characterized in that** the low-friction layer (16) is applied to the end portions (7) by means of a thermoplastic hot-melt adhesive.

6. Method for manufacturing a stator (2) of a dynamoelectric machine (1) according to one of the preceding claims, **characterized in that** the winding (25) is inserted into one or more slots (8) by means of an insertion blade tool (13), wherein the insertion blade tool (13) engages on the side of the slot opening (12) facing the stator bore (30).

7. Stator (2) of a dynamoelectric machine (1), manufactured according to one of claims 1 to 6, **characterized in that** the slot opening (12) is coated, wherein the coating is a plastic layer having a thickness of only a few µm to a maximum of 50 µm.

8. Stator (2) of a dynamoelectric machine (1) according to claim 7, **characterized in that**, the slot opening (12) corresponds to x times the wire diameter of the winding (25), wherein x>1.

9. Dynamoelectric machine (1) having a stator (2) according to claim 7 or 8, **characterized in that** the efficiency of the dynamoelectric machine (1) is at least 95%.

10. Use of a dynamoelectric machine (1) according to claim 9 in drives, in particular in drives in continuous operation, such as fans, compressors, pumps, and the like.

## Revendications

1. Procédé de fabrication d'un stator (2) pour une machine dynamoélectrique (1), comprenant les étapes suivantes :
- Empilage d'un paquet de tôles (23) comportant au moins un alésage de stator (30), des rainures axiales (8) et des fentes de rainure (12) orientées vers l'alésage de stator (30), une rainure (8), vue dans le sens circonférentiel, étant formée par deux tiges de dent (4) immédiatement adjacentes, des parties des têtes de dent (6) correspondantes, la fente de rainure (12) et un fond de rainure (9), la fente de rainure (12) étant formée par deux parties d'extrémité (7) opposées de têtes de dent (6) adjacentes, vues dans le sens circonférentiel,
- revêtement des sections d'extrémité (7) avec un revêtement lubrifiant, notamment électriquement isolant (16), - insérer un enroulement (25), notamment préfabriqué, en particulier des faisceaux de fils ronds en forme de bobine, dans les rainures (8) via les fentes de rainure (12), et **caractérisé en ce que**
- l'application sur les parties d'extrémité (7) des têtes de dents (6) est réalisée par centrifugation ou au moyen d'une buse, en particulier une buse rotative, ce dispositif de centrifugation ou de pulvérisation étant déplacé axialement à l'intérieur de l'alésage du stator (30) pendant l'application, et recouvrant ainsi une ou simultanément plusieurs fentes de rainure (12) de la couche lubrifiante (16).

2. Procédé de fabrication d'un stator (2) pour une machine dynamoélectrique (1) selon la revendication 1, **caractérisé en ce que** la couche lubrifiante (16) est pulvérisée sur les parties d'extrémité (7) sous forme de vernis duromères dilués.

3. Procédé de fabrication d'un stator (2) pour une machine dynamoélectrique (1) selon la revendication 1, **caractérisé en ce que** la couche lubrifiante (16) est appliquée sur les parties d'extrémité (7) sous forme de thermoplastiques solubles.

4. Procédé de fabrication d'un stator (2) pour une machine dynamoélectrique (1) selon la revendication 1, **caractérisé en ce que** la couche lubrifiante (16) est pulvérisée sur les sections d'extrémité (7) au moyen de cires ou de graisses à point de fusion élevé.

5. Procédé de fabrication d'un stator (2) pour une machine dynamoélectrique (1) selon la revendication 1, **caractérisé en ce que** la couche lubrifiante (16) est appliquée sur les parties d'extrémité (7) au moyen d'un adhésif thermofusible thermoplastique.

6. Procédé de fabrication d'un stator (2) de machine dynamoélectrique (1) selon l'une des revendications précédentes, **caractérisé en ce que** le bobinage (25) est inséré dans une ou plusieurs rainures (8) à l'aide d'un outil à lamelles (13), l'outil à lamelles (13) étant placé du côté de la fente de rainure (12) tourné vers l'alésage du stator (30).

7. Stator (2) d'une machine dynamoélectrique (1) fabriqué selon l'une des revendications 1 à 6, **caractérisé en ce que** la fente de rainure (12) est revêtue, le revêtement étant une couche de matière plastique d'une épaisseur de quelques µm seulement jusqu'à 50 µm au maximum.

8. Stator (2) d'une machine dynamoélectrique (1) selon la revendication 7, **caractérisé en ce que** la fente de rainure (12) correspond à x fois le diamètre du fil de l'enroulement (25), avec x > 1.

9. Machine dynamoélectrique (1) dotée d'un stator (2) selon la revendication 7 ou 8, **caractérisée en ce que** le rendement de la machine dynamoélectrique (1) est d'au moins 95 %.

10. Utilisation d'une machine dynamoélectrique (1) selon la revendication 9 pour les entraînements, en particulier pour les entraînements en fonctionnement continu tels que les ventilateurs, les compresseurs, les pompes, etc.
